# EUROPEAN PATENT SPECIFICATION

(11) **EP 2 922 800 B1**
(45) Date of publication and mention of the grant of the patent: **23.10.2019**
(21) Application number: 13792701.8
(22) Date of filing: 21.11.2013
(51) Int. Cl.: C04B 7/44, C10L 5/00, F26B 3/00, C04B 7/43, F26B 3/10, F26B 17/10

(54) **PROCESS AND EQUIPMENT FOR DRYING SOLID WASTE MATERIAL USING GAS FROM A CLINKER COOLER**
VERFAHREN UND AUSRÜSTUNG ZUM TROCKNEN VON FESTABFÄLLEN MITTELS GAS AUS EINEM ZEMENTKLINKERKÜHLER
PROCÉDÉ ET ÉQUIPEMENT DESTINÉS AU SÉCHAGE DE DÉCHETS SOLIDES À L'AIDE DE GAZ DU REFROIDISSEUR DE CLINKER DE CIMENT

(30) Priority: 22.11.2012 EP 12306453
(43) Date of publication of application: 30.09.2015
(73) Proprietor: Holcim Technology Ltd, 8645 Jona (CH)
(72) Inventor: KOECK, Bernhard, A-2391 Kaltenleutgeben (AT)
(74) Representative: Keschmann, Marc
(86) International application number: PCT/EP2013/074354
(87) International publication number: WO 2014/079915

(56) References cited:
- WO-A2-2004/103927
- CA-A1- 2 416 402
- DE-A1- 3 537 595
- GB-A- 2 396 400
- JP-A- S63 151 650
- JP-A- 2006 266 552
- JP-A- 2008 195 584

## Description

The present invention relates to a process and an equipment for drying solid waste material, a process for producing clinker including this drying process, and to a clinker plant comprising this drying equipment.

WO2004/103927A2 discloses an equipment for drying wet-ground raw meal comprising a drying pipe comprising at least an upward section, a means for feeding wet-ground raw meal to be dried at a feeding point, located at the bottom of said upward section, a means for feeding a drying gas in said upward section, said drying gas consisting of recirculated steam from the drying pipe, in order to create an upward flow of said waste material in said upward section and to provide a final drying gas and dried solid waste material, and a means for separating the final drying gas from the dried solid waste material.

JP2006266552A discloses a process for drying solid waste material comprising providing a drying pipe comprising an upward section, feeding solid waste material to be dried at a feeding point, feeding a drying gas into said upward section, in order to create an upward flow of said waste material in said upward section and to provide a final drying gas and dried solid waste material, and separating the final drying gas from the dried solid waste material, downstream of the drying pipe.

CA2416402A1 also refers to a process for drying solid waste material and GB2396400A discloses a co-combustion process, wherein the exhaust gas of a clinker cooler is fed into a municipal solid waste system. In production processes of conventional clinker, the raw meal is conveyed to a pyro-processing area, which may include preheaters and calciners to condition the raw meal prior to its introduction in a rotary kiln, wherein clinker is produced. The main kiln and the calciners are heated by a burner using coal, oil or gas as fuel. At the outlet of the rotary kiln, the hot clinker is introduced into a cooler into which substantial amounts of air are blown through the bed of clinker, in order to reduce its temperature to about 80°C.

One of the largest cost items in the production of clinker is the cost of fuel. With ever increasing prices for coal, oil and gas, alternative source of fuel are constantly sought for use in this production process.

In this respect, the use of shredded solid waste material is interesting. However, this type of waste material usually has a high moisture content which reduces its efficiency as fuel. By way of example, solid waste material with original 25% moisture has a Low Heat Value of 18.000 kJ/kg. This solid waste material has an improved Low Heat Value of 23.500 kJ/kg after a drying operation is carried out reducing the residual moisture content to 5%.

Therefore, there is a need to dry this waste material, before it is introduced into the kiln and/or the calciner. A first known type of solution uses drum and belt dryers, wherein the solids to be dried are put in contact with gas. However these dryers are bulky, expensive, and not easily available.

Moreover US 7,434,332 patent describes the use of a contact dryer, wherein waste material is dried before introduction into the kiln or the calciner. Gas from the clinker cooler is fed into this dryer, in order to treat the waste material However such a solution has drawbacks. First, it implies high costs to install this dryer and its connections to other parts of the cement plant. Moreover, the residence time of the waste material is very high during this process.

In view of the above, the technical problem that the present invention seeks to solve is to provide a process which makes it possible to dry waste material in a quick and simple manner, and which can be carried out using inexpensive equipment.

Surprisingly, the applicants have shown that a flash type of drying process, wherein solid waste material to be dried are driven upward by high-speed gas, which leads to unexpected positive results.

Accordingly, the present invention provides a process for drying solid waste material comprising:
- providing a drying pipe comprising an upward section;
- feeding solid waste material to be dried at a feeding point, located at the bottom of the upward section;
- feeding a drying gas into said upward section at a speed greater than 15 m/s, said drying gas comprising exhaust gas from a clinker cooler, in order to create an upward flow of said waste material in this upward section and to provide a final drying gas and dried solid waste material; and
- separating the final drying gas from the dried solid waste material, downstream of the drying pipe.

The present invention relates to the use of solid waste material as fuel or a fuel additive in a clinker production process. Solid waste material is generally non-soluble, discarded solid material, including sewage sludge, municipal waste, industrial waste material, agricultural refuse, demolition waste material and mining residue.

The present invention may present one or more of the following advantages.

The drying process of the invention may be carried out in a very simple manner. Moreover, this process may use only a few mechanical elements, which are simple in structure and low in cost.

Moreover, the residence time of solid waste material is much lower for the process according to the present invention than for drying processes of the prior art. Therefore, according to the invention, dried solid waste material may be directly injected into the burner without further dosing or storage. This is to be compared with the known solutions described above, comprising at least two dosing steps, due to a much longer residence time of the waste material.

The speed of the feeding drying gas is preferably greater than 20 m/s.

The waste material used in the present invention preferably has a maximum dimension of less than 70 millimeters, in particular less than 50 millimeters. In order to meet this requirement, the waste material usually undergoes a treatment step in order to reduce the size. Such treatment may be a shredding step.

In the present description and the accompanying claims, "greater than" and "less than" are to be understood respectively as "greater than or equal to" and "less than or equal to". Furthermore, "upstream" and "downstream" refer to gas flows in normal operation conditions.

The upward section of the drying pipe is preferably substantially vertical. In this respect, the global angle of this section towards the vertical direction is less than 30°.

Solid waste material is fed at the feeding point, which is located at the bottom of the drying pipe. Drying gas is also fed into this pipe. A substantial fraction of this gas is exhaust gas from the clinker cooler. This exhaust gas may be diluted with other gases, in particular fresh air, in order to control the temperature of the global drying gas at the inlet of the pipe.

The waste material is conveyed upwards, due to the fast flow rate of the drying gas. During its flow through the pipe, the waste material is mixed with hot gas, so that it is unexpectedly well dried at the outlet of the pipe. The drying pipe may be constituted of a single upward section, or may also comprise at least one further section, located downstream of the upward section.

A typical gas speed at the inlet of the upward section is 15 to 35 m/s (meters per second), depending on the properties of the waste material, and the manner in which the waste material is introduced into the pipe. This speed refers to the gas speed at the feeding point. As is known in the art, the speed of gas gradually decreases as it passes through the pipe. The speed of solids is lower than the speed of gas, and it varies according to the nature of the solid particles, in particular their density and size.

In this respect, waste material may be introduced into the drying pipe by any appropriate means, for example using mechanical or pneumatic means. During the upward movement of the waste material, heavy particles can fall and may have to be removed. The gas speed in the upward section may be adjusted to optimise this potential fall of heavy particles.

At the outlet of the drying pipe, a mixture of gas and dried solid waste material enters the separation means. The separation operation may comprise one or more steps, which may be carried out in a known manner. After this separation step, the dried waste material is conveyed to a burner at the plant. The burner may be the kiln burner and/or the calciner burner.

The gas residence time in the drying pipe is suitably less than 5 seconds, preferably from 1 to 5 seconds, more preferably from 1.5 to 3 seconds. The residence time of solids is generally much longer in known prior art processes.

The height of the upward section of the drying pipe may be greater than 20 meters, preferably from 30 to 40 meters.

The cross-section of the drying pipe, in particular the diameter, is less than 1500 millimeters, preferably from 500 to 1000 mm.

The entire length of the drying pipe is suitably more than 25 meters, preferably from 30 to 80 meters.

The waste material is suitably fed at the feeding point at an upward speed greater than 20 m/s. The gas speed in the pipe can be lower, remaining sufficient to avoid excessive falls of solids in the upward section. Therefore, the residence time of the solids in the drying pipe may be increased, which promotes the mixing and the quality of the drying operation. Even though the residence time can be increased, it is still far below the residence time in processes according to the prior art.

The drying gas may be fed into the drying pipe at a temperature of from 125 to 300°C, preferably from 150 to 220°C. This temperature depends in particular on the moisture content of the solid waste material to be dried. Preferably the upper temperature limit should not be exceeded to avoid ignition, and avoid high temperature agglomeration of potential plastic parts of the equipment.

The flow rate of the exhaust gas fed into the drying pipe may be from 2 to 15 Nm³ per kilogram of treated waste material, preferably from 2 to 8 Nm³ per kilogram of treated waste material.

The volume proportion of exhaust gas in the total drying gas, may suitably be greater than 20%, preferably greater than 40%. The volume proportion of exhaust gas depends in particular on the temperature of this gas when it leaves the cooler, as well as the nature of the dust-removing apparatus upstream of the drying pipe.

The exhaust gas may be diluted with fresh air before the feeding point. The flow rate of fresh air may be controlled as a function of the temperature of the drying gas downstream of the drying pipe. This embodiment makes it possible to control the parameters of drying air in a simple and accurate manner.

The drying pipe may further comprise a downward section, separated from the upward section by a curve section. This improves the mixing of the gas and solids and increases the global length of the drying pipe and therefore the global residence time, while increasing as little as possible the global height of this pipe, which reduces its bulkiness.

The present invention further provides a process for the production of clinker, comprising the following steps:
- drying the solid waste material by a drying process as defined hereinbefore,
- feeding the dried solid waste material as fuel into a burner of a calciner and/or into a burner of a kiln, another complementary fuel being used when needed,
- calcining raw meal in said calciner, and
- sintering the raw meal in said kiln to obtain said clinker.

In the process of the present invention, the final drying gas may be conveyed to a clinker cooler. In this case, the final drying gas may be conveyed to the inlet fan of at least one compartment of said clinker cooler, said fan being connected to an upstream chamber receiving fresh air, via a fresh air line provided with a mobile flap.

The present invention further provides an equipment for drying solid waste material, said equipment comprising:
- a drying pipe comprising at least an upward section;
- a means for feeding solid waste material to be dried at a feeding point, located at the bottom of said upward section;
- a means for feeding a drying gas in said upward section at a speed greater than 15 m/s, in particular greater than 20 m/s, said drying gas comprising exhaust gas from a clinker cooler, in order to create an upward flow of said waste material in said upward section and to provide a final drying gas and dried solid waste material;
- a means for separating the final drying gas from the dried solid waste material.

The drying pipe of this equipment may comprise any of the features, listed above in reference to the drying process of the invention.

The equipment of the invention is in particular adapted to carry out the drying process of the invention, as defined hereinbefore.

The present invention further provides a plant for the production of clinker, comprising a calciner to calcine raw meal, a kiln to sinter the raw meal, and an equipment as defined hereinbefore, said plant also comprising conveying means to convey said dried solid waste material, said conveying means being connected to a burner of said calciner and/or a burner of said kiln.

The plant may further comprise a clinker cooler comprising several compartments, the inlet fan of at least one of said compartments being connected to a preliminary chamber receiving a fresh air line provided with a mobile flap, as well as a further line to feed the final drying gas.

The invention is further illustrated in the accompanying drawings, wherein:
Figure 1 is a schematic diagram of a drying equipment according to the invention;
Figure 2, at a larger scale, is a part of a drying pipe in the drying equipment of Figure 1;
Figure 3 is a schematic diagram of a kiln and a cooler, connected to the drying equipment of Figure 1 for gas transfers; and
Figure 4, at a larger scale, is part of the cooler illustrated in Figure 3.

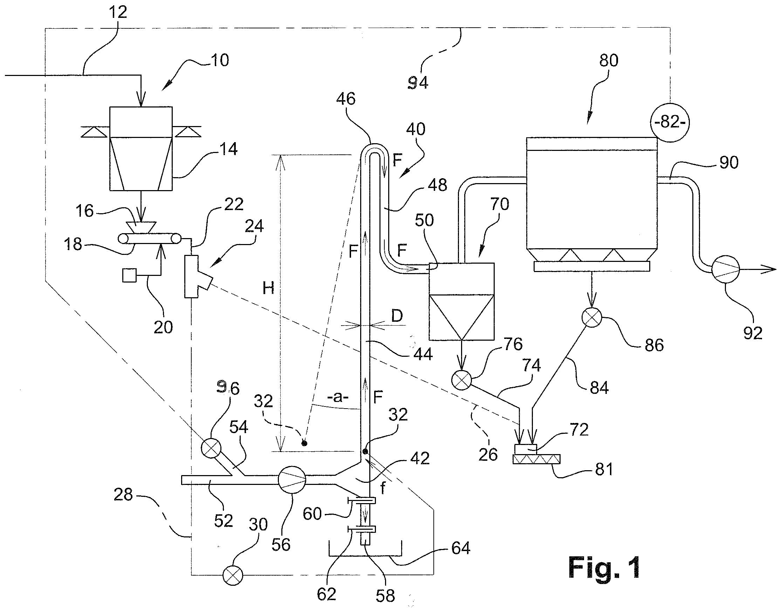

Figure 1 illustrates an equipment for drying solid waste material, according to the present invention. This equipment comprises dosing means 10, to feed a controlled flow rate of waste material. These dosing means comprise a feeding line 12 wherein solid waste material, as defined above, circulates. This waste material has been treated in an appropriate manner in order to reduce their size, in particular via a shredder. This waste material is then fed, via a hopper 14, into a container 16 which circulates on an endless belt 18. The speed of the belt is controlled by typical control means 20. Various other types of feeders can be used, for example, rotating cells. The shredder (not shown) and the components 12 to 20 of the dosing means are known per se and will not be described more in detail.

Dosed solid waste material is then fed, via a line 22, into an optional diverter 24, which is used to bypass the drying pipe 40 in case of problems, via line 26. In normal operation conditions, all the waste material exits the diverter 24 along line 28, via a valve 30, via a pneumatic injection device not illustrated in the figures. Waste material is then fed into said drying pipe 40. In the present description, 32 refers to the connection point between the feeding line 28 and the drying pipe 40. In the present description, 32 also refers to the feeding point.

The drying pipe, which is referred to by 40, comprises an inlet section 42, an upward section 44, where the solid waste material and the gas flow upwards, a curve section 46, and a downward section 48, where the solid waste material and the gas flow downwards. The inlet section 42 is connected to an exhaust line 52 from a clinker cooler, which is not illustrated in Figure 1. A further line 54, which feeds fresh air at ambient temperature, is connected to the exhaust line 52. A booster fan 56, known per se, is also provided immediately upstream of the inlet section 42.

The inlet section 42 is also connected to a refuse pipe 58, wherein large particles can fall from the upward section 44, due to gravity. This pipe 58 is provided with two successive gates 60 and 62 that are controlled by any appropriate means, in particular manual or pneumatic control means. A refuse container 64 is provided, below the outlet of the pipe 58.

The entire length of the drying pipe corresponds to the distance between the feeding point 32 and the outlet 50 of the downward section 48. Suitably, this length is from 25 to 100 meters, preferably from 30 to 80 meters. D is denoted as the diameter of the drying pipe, which may be constant or may slightly vary along the two sections 44 and 48. Suitably, D is from 500 to 1500 mm, preferably from 500 to 1000 mm. H is denoted as the height of the upward section, from the feeding point 32 to the connection with the curve section. Suitably, H is from 20 to 40 meters, preferably from 30 to 40 meters.

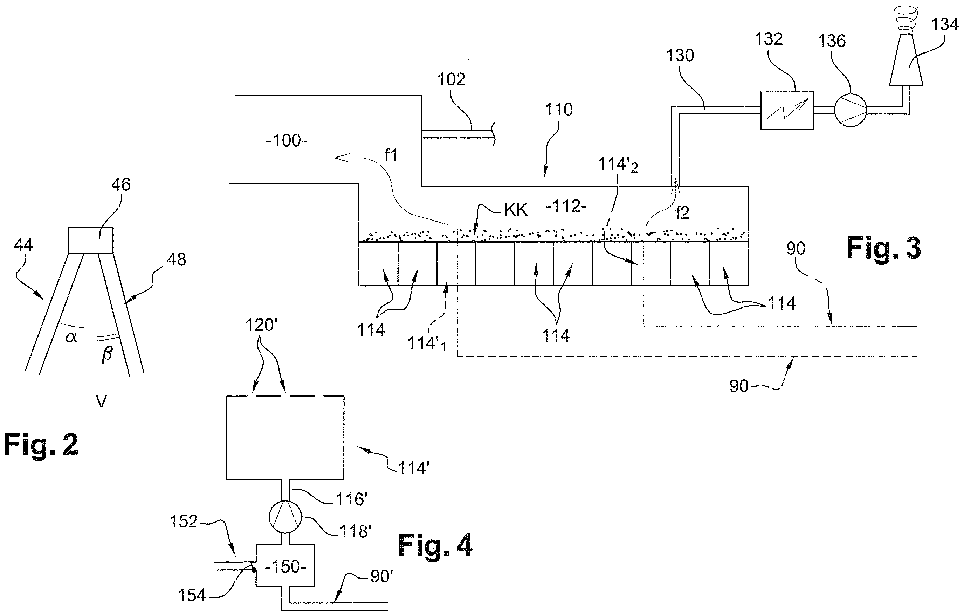

The curve section ensures a function of further mixing of the drying gas and the solid waste material to be dried. This section may be designed as a pipe forming a substantially 180° angle. Alternatively, as illustrated in Figure 2, this section may be designed as a box or a chamber 46, with two ports respectively connected to the upward and downward sections (44, 48).

In Figure 1, both the upward and the downward sections 44 and 48 are vertical relative to the curve section. Alternatively, the entire upward section 44 may be at a slight angle (a) relative to the vertical direction, illustrated by the dotted lines on Figure 1. This angle is preferably less than 30°, more preferably less than 20°.

Moreover, at least one portion of the upward section 44 may have a greater slope than angle (a). However, in order to obtain suitable mixing, this maximum slope is preferably less than 40°, more preferably less than 25°, relative to the vertical direction.

As a further alternative (see Figure 2), the upper end of at least one of the sections 44 and 48 may be at an angle relative to the vertical direction. If V is a vertical line extending from the middle of curve section 46, α is the angle between V and the upward section 44, whereas β is the angle between V and the downward section 48. Preferably, α is from 0° to 20°, β is from 0° to 40°, whereas the total angle (α+β) is from 0° to 60°.

The drying apparatus in Figure 1 also comprises means to separate the dried solid waste material from the drying gas. These means first comprise a cyclone 70, known per se, the inlet of which is connected to the outlet 50. This cyclone has a first outlet, to feed solid waste material into a reception means 72, via a line 74 provided with a valve 76. The reception means 72, which are of any appropriate type, also receive potentially untreated solid waste material, via the line 26 described hereinbefore.

The second outlet of the cyclone extends to the inlet of a bag filter 80, known per se, also belonging to the separation means. This bag filter has a first outlet, to feed solid waste material to the reception means 72, via a line 84 provided with a valve 86. The second outlet of the bag filter is connected to an exhaust line 90, provided with a sucking fan 92.

In operation, dosing means are used in a known manner, in order to convey a predefined flow rate of solid waste material to the feeding point 32. By way of example, this feeding flow rate is from 0.5 to 5 t/h. Advantageously, solid waste material is delivered at point 32 with an upward speed SW (shown by arrow f) from 0 to 35 m/s. Alternatively, gravimetric feeding of the waste material is possible, without any upward speed or even with downward falling. This is compensated by a higher upward gas speed in the drying pipe 40.

At the same time, the fan 56 aspirates exhaust gas and fresh air into the respective lines 52 and 54, in order to blow drying gas into the feeding point 32. Cooler exhaust gas is preferably de-dusted by any appropriate means, in particular an electro-filter, a bag filter with high temperature bags, or a take-off with a cyclone. Suitably, when it arrives at the feeding point 32, the temperature of the drying gas is from 125 to 300°C, preferably from 150 to 220°C, and a typical upward speed SG is from 15 to 35 m/s. The typical flow rate of the exhaust gas fed into the drying pipe is from 2 to 15 Nm³, preferably from 2 to 8 Nm³, per kilogram of treated waste material.

Due to the upward movement of the drying gas, solid waste material entering the drying pipe 40 at the feeding point 32 is first lifted upwards in the upward section 44, and enters the curve section 46, which results in further mixing of the solid waste material and the drying gas. Thereafter, the solid waste material is conveyed to the outlet 50, via the downward section 48. The movement direction of the waste material is shown by the arrows F. During its passage through the sections 44, 46 and 48, the solid waste material is dried by the action of the hot gas. Gas residence time is typically from 1 to 5 seconds, between the feeding point 32 and the outlet 50.

The heaviest solid particles do not reach the curve section 46 but fall into the refuse pipe 58, due to gravity. These particles correspond to solid waste material that has not been properly shredded, or to other undue particles such as stones, glass, or metals. They fall against the upper face of gate 60. The latter is first opened, while gate 62 is kept closed, so that the particles fall against the upper face of this gate 62. Thereafter the gate 60 is closed, and the gate 62 is opened so that the particles can be collected in the refusal container 64. The above operation of gates 60 and 62 is advantageous, since it prevents any arrival of fresh air into the drying pipe 40, which would disturb the drying process. The heaviest particles, collected in the container 64, are conveyed to the refusal, or to other appropriate locations at the clinker plant. Other types of air-tight extractions can be used, for example a rotary air lock Instead of this double gate.

A mix of dried waste material and gas, at a temperature from 65 to 100°C, then enters the cyclone 70 which ensures a primary separation. Dried waste material exits the cyclone 70 and is conveyed to reception means 72, while the gas which could potentially still contain a slight fraction of waste material enters the bag filter 80, at a temperature of 65 to 100°C. The bag filter 80 ensures a final separation, and a further fraction of dried waste material can be conveyed to the reception means 72. The dried waste material coming from line 74 and potentially from line 84 is then fed into the burner, via any appropriate means, such as a pneumatic transport device 81.

An appropriate sensor 82 measures the temperature of the drying gas, after exiting the drying pipe 40. If this measured value is greater than a predetermined temperature threshold, for example 75°C at the outlet of the bag filter 80, a control line 94 opens a valve 96 on the fresh air line 54, in order to increase the flow rate of fresh air. Therefore, the proportion of hot exhaust gas in the global drying gas is reduced, so that the temperature of the drying gas decreases, both upstream and downstream of the drying pipe 40. In contrast, if the measured value is less than the above threshold, the flow rate of fresh air is reduced, in order to raise the temperature of the drying gas, both upstream and downstream of the drying pipe 40. It is to be noted that the drying gas mainly comprises exhaust gas from the cooler, in both operating configurations.

The gas, which is substantially free of waste material, also called the final drying gas, exits the bag filter 80 via the exhaust line 90, at a temperature typically of 65 to 100°C. In a first embodiment of the invention, this final drying gas is sent to a chimney, not shown in the figures. However, in particular if this final drying gas has a significantly unpleasant smell, it may be advantageous to carry out a further treatment of this final drying gas, as shown in Figures 3 and 4.

These figures illustrate one part of a plant for the production of clinker. This plant generally comprises a rotary kiln 100, provided with a partially illustrated fuel line 102. The clinker produced in this kiln passes to a clinker cooler 110, which comprises an upper cooling area 112, and several lower compartments 114. Each of the lower compartments comprises a feeding line for fresh air, a fan and an upper face provided with holes, which enable air to pass into the area 112 and to cool the hot clinker. According to the location of the compartments 114, the cooling air is conveyed either into the kiln 100, or to a line 130 as excess cooling air. This excess air typically passes into an electro-filter and/or a heat exchanger and/or a bag filter 132, and is fed into a chimney 134 via a fan 136.

According to the invention, it is advantageous to convey the final drying gas, via the exhaust line 90, into the clinker cooler 110. Figure 4 illustrates one specific compartment 114' with its feeding line 116' provided with its fan 118'. A chamber 150 is provided at the upstream end of this line 116'. This chamber 150 receives both a fresh air line 152, and the downstream end 90' of the exhaust line described hereinbefore 90. Moreover, a mobile flap 154 closes the downstream port, i.e. the outlet of the fresh air line 152.

In operation, the inside volume of the chamber 150 is kept at a negative pressure. The final drying gas enters the chamber, via the end 90'. The mobile flap 154 is controlled to keep the pressure in the chamber 150 negative, while the fan 118' is operated according to the cool air flow demands of the kiln. A mix of fresh air and final drying gas then enters the compartment and the cooling area, through the holes 120'.

There are two main possibilities, concerning the location of the specific compartment 114'. Referring to Figure 3, this compartment, which is given reference number 114'₁, can be positioned on the side of the cooler 110, adjacent to kiln 100. Therefore, the final drying gas is fed into this compartment 114'₁, it cools the clinker in the area 112 and passes into the kiln 100 according to the direction of the arrow f1. This embodiment of the invention, shown in dotted lines, is advantageous since it completely destroys unpleasant smells, as well as potentially dangerous emissions contained in the final drying gas, the latter being reintroduced into the kiln.

Alternatively, the specific compartment, which is given the reference number 114'₂, may be positioned on the side of the cooler 110, opposite the kiln 100. Therefore, the final drying gas is fed into this compartment 114'₂, it cools the clinker in the area 112, passes into the line 130 according to the direction of arrow f2 and is conveyed to the chimney 134, via the fan 136. This embodiment of the invention is advantageous since the bed of hot clinker KK at least partially destroys the smell and potentially dangerous emissions, whilst kiln operations are not disturbed. Alternatively, the inlet fan of two or more compartments may be fed with the final drying gas.

According to a not shown embodiment, there may be two further control loops. The gas volume may be controlled with the fan 92, preferably speed-controlled, optionally damper-controlled, to adjust the desired residence time as well as the fall. The pressure at the inlet 42 may be controlled to slightly negative pressures by the fan 56, preferably it is speed-controlled, optionally damper-controlled. Optionally, the process may be carried out without the fan 56, depending on the location of the drying pipe 40, mainly on its distance to the cooler exhaust.

The following non-restrictive examples illustrate embodiments of the invention.

### EXAMPLE

The equipment shown in Figure 1 was used. The shredding apparatus comprised a primary shredder - magnetic separator, simple wind shifter - with about 5% fall out, and a secondary shredder. The input material was constituted by municipal waste material. At the outlet of shredding apparatus, the largest dimension of the particles of waste material was about 35 mm. The drying pipe 40 was about 37 meters long, with a diameter of 600 mm. It comprised an upward section 44 with a height of about 25 meters, a curve section 46 and a downward section 48. An exhaust clinker cooler gas was available at a temperature of from 250 to 300°C, via line 52.

Three successive tests were carried out.

### TEST 1

Waste material was fed at the feeding point 32, at a flow rate of 1 t/h, and an upward speed SW of 30 m/s. The moisture of this waste material was from 30 to 36%. A drying gas was composed of 50% by volume of gas from an exhaust cooler, and 50% by volume of fresh air at 20°C. This drying gas, at a temperature of 170°C, was fed into the bottom of the drying pipe 40 at a flow rate of 14.000 Nm/h and an upward speed SG of about 23 m/s. The gas residence time, between the feeding point 32 and the outlet 50, was about 2 seconds. At the outlet of the drying pipe 40, the dried solid waste material was separated from the final drying air.

The moisture of the dried waste material was 10% for this first test.

### TEST 2

Waste material was fed at the feeding point 32, at a flow rate of 2 t/h, and an upward speed SW of 30 m/s. The moisture of this waste material was in the range of 30 to 36%. A drying gas was composed of 60% by volume of gas from an exhaust cooler, and 40% by volume of fresh air at 20°C. This drying gas, at a temperature of 200°C, was fed into the bottom of the drying pipe 40 at a flow rate of 15.000 Nm/h and an upward speed SG of about 26 m/s. The gas residence time, between the feeding point 32 and the outlet 50, was about 1.9 seconds. At the outlet of the drying pipe 40, the dried solid waste material was separated from the final drying air.

The moisture of the dried waste material was 7% for this second test.

### TEST 3

Waste material was fed at the feeding point 32, at a flow rate of 3 t/h, and an upward speed SW of 30 m/s. The moisture of this waste material was in the range of 30 to 36%. A drying gas was composed of 65% by volume of gas from an exhaust cooler, and 35% by volume of fresh air at 20°C. This drying gas, at a temperature of 210°C, was fed into the bottom of the drying pipe 40 at a flow rate of 16.000 Nm/h and an upward speed SG of about 28 m/s. The gas residence time, between the feeding point 32 and the outlet 50, was about 1.8 seconds. At the outlet of the drying pipe 40, the dried solid waste material was separated from the final drying air.

The moisture of the dried waste material was 15% for this third test.

For each of these tests, material comprising only stones and glass was collected in the container 64. Substantially all the solid waste material was captured in the cyclone 70. No solid material came out of bag filter 80.

## Claims

1. A process for drying solid waste material comprising:
- providing a drying pipe (40) comprising an upward section (44);
- feeding solid waste material to be dried at a feeding point (32), located at the bottom of said upward section;
- feeding a drying gas into said upward section at a speed greater than 15 m/s, said drying gas comprising exhaust gas from a clinker cooler, in order to create an upward flow of said waste material in said upward section and to provide a final drying gas and dried solid waste material; and
- separating the final drying gas from the dried solid waste material, downstream of the drying pipe.

2. The process according to claim 1, wherein the gas residence time in the drying pipe (40) is less than 5 seconds.

3. The process according to claim 1 or 2, wherein the height (H) of the upward section is more than 20 meters.

4. The process according to any one of the preceding claims, wherein the cross-section of the drying pipe is less than 1500 mm.

5. The process according to any one of the preceding claims, wherein the entire length of the drying pipe is more than 25 meters.

6. The process according to any one of the preceding claims, wherein waste material is fed at the feeding point at an upward speed greater than 20 m/s.

7. The process according to any one of the preceding claims, wherein the drying gas is fed into the drying pipe at a temperature of from 125 to 300°C.

8. The process according to any one of the preceding claims, wherein the exhaust gas is diluted with fresh air before the feeding point, and the flow rate of fresh air is controlled as a function of the temperature of the drying gas downstream of the drying pipe.

9. The process according to any one of the preceding claims, wherein the drying pipe further comprises a downward section (48), separated from the upward section (44) by a curve section (46).

10. A process for the production of clinker, comprising the following steps:
- drying the solid waste material by a drying process according to any one of preceding claims,
- feeding the dried solid waste material as fuel into a burner of a calciner and/or into a burner of a kiln, another complementary fuel being used when needed,
- calcining raw meal in said calciner, and
- sintering the raw meal in said kiln to obtain said clinker.

11. The process according to the preceding claim, wherein the final drying gas is conveyed to a clinker cooler (110).

12. The process according to the preceding claim, wherein the final drying gas is conveyed to the inlet fan (118') of at least one compartment (114') of said clinker cooler, said fan being connected to an upstream chamber (150) receiving fresh air, via a fresh airline (152) provided with a mobile flap (154).

13. An equipment for drying solid waste material comprising:
- a drying pipe (40) comprising at least an upward section (44);
- a means (28) for feeding solid waste material to be dried at a feeding point (32), located at the bottom of said upward section;
- a means (70, 80) for separating the final drying gas from the dried solid waste material, **characterized in that**
- the equipment further comprises a fan (56) for feeding a drying gas in said upward section at a speed greater than 15 m/s, said drying gas comprising exhaust gas from a clinker cooler, in order to create an upward flow of said waste material in said upward section and to provide a final drying gas and dried solid waste material.

14. A plant for the production of clinker, comprising a calciner to calcine raw meal, a kiln to sinter the raw meal, and an equipment according to claim 13, said plant also comprising conveying means (81) to convey said dried solid waste material, said conveying means being connected to a burner of said calciner and/or a burner of said kiln.

15. The plant according to the preceding claim, further comprising a clinker cooler (110) comprising several compartments, the inlet of at least one (114') of said compartments being connected to a preliminary chamber (150) receiving a fresh air line (152) provided with a mobile flap (154), as well as a further line (90) to feed the final drying gas.

## Patentansprüche

1. Verfahren zum Trocknen von festem Abfallmaterial, umfassend:
- Bereitstellen eines Trocknungsrohrs (40) mit einem Aufwärtsabschnitt (44);
- Zuführen von festem Abfallmaterial, das getrocknet werden soll, an einem Zuführpunkt (32), der sich am Boden des genannten Aufwärtsabschnitts befindet;
- Einspeisen eines Trocknungsgases in den Aufwärtsabschnitt mit einer Geschwindigkeit von mehr als 15 m/s, wobei das genannte Trocknungsgas Abluft von einem Klinkerkühler umfasst, um einen Aufwärtsstrom des genannten Abfallmaterials in dem genannten Aufwärtsabschnitt zu erzeugen und ein finales Trocknungsgas und getrocknetes festes Abfallmaterial bereitzustellen; und
- Abtrennen des finalen Trocknungsgases von dem getrockneten festen Abfallmaterial stromabwärts des Trocknungsrohrs.

2. Verfahren nach Anspruch 1, **dadurch gekennzeichnet, dass** die Gasverweilzeit im Trocknungsrohrs (40) weniger als 5 Sekunden beträgt.

3. Verfahren nach Anspruch 1 oder 2, wobei die Höhe (H) des Aufwärtsabschnitts mehr als 20 Meter beträgt.

4. Verfahren nach einem der vorhergehenden Ansprüche, wobei der Querschnitt des Trocknungsrohrs weniger als 1500 mm beträgt.

5. Verfahren nach einem der vorhergehenden Ansprüche, wobei die gesamte Länge des Trocknungsrohrs mehr als 25 Meter beträgt.

6. Verfahren nach einem der vorhergehenden Ansprüche, wobei Abfallmaterial an der Zuführstelle mit einer Aufwärtsgeschwindigkeit von mehr als 20 m/s zugeführt wird.

7. Verfahren nach einem der vorhergehenden Ansprüche, wobei das Trocknungsgas bei einer Temperatur von 125 bis 300°C in das Trocknungsrohr eingespeist wird.

8. Verfahren nach einem der vorhergehenden Ansprüche, **dadurch gekennzeichnet, dass** die Abluft vor dem Einspeisepunkt mit Frischluft verdünnt wird und der Frischluftstrom in Abhängigkeit von der Temperatur des Trocknungsgases stromabwärts des Trocknungsrohrs geregelt wird.

9. Verfahren nach einem der vorhergehenden Ansprüche, wobei das Trocknungsrohr ferner einen Abwärtsabschnitt (48) umfasst, der durch einen Kurvenabschnitt (46) vom Aufwärtsabschnitt (44) getrennt ist.

10. Verfahren zur Herstellung von Klinker, umfassend die folgenden Schritte:
- Trocknen des festen Abfallmaterials durch ein Trocknungsverfahren nach einem der vorhergehenden Ansprüche,
- Einspeisen des getrockneten festen Abfallmaterials als Brennstoff in einen Brenner eines Kalzinators und/oder in einen Brenner eines Ofens, wobei bei Bedarf ein weiterer ergänzender Brennstoff verwendet wird;
- Kalzinieren von Rohmehl in dem Kalzinator und
- Sintern des Rohmehls in dem Ofen, um den Klinker zu erhalten.

11. Verfahren nach dem vorhergehenden Anspruch, wobei das finale Trocknungsgas einem Klinkerkühler (110) zugeführt wird.

12. Verfahren nach dem vorhergehenden Anspruch, **dadurch gekennzeichnet, dass** das finale Trocknungsgas zum Einlassventilator (118') mindestens einer Kammer (114') des genannten Klinkerkühlers geleitet wird, wobei der genannte Ventilator mit einer stromaufwärtigen Kammer (150) verbunden ist, die Frischluft über eine Frischluftleitung(152) erhält, die mit einer mobilen Klappe (154) versehen ist.

13. Einrichtung zum Trocknen von festem Abfallmaterial, umfassend:
- ein Trocknungsrohr (40) mit mindestens einem Aufwärtsabschnitt (44);
- ein Mittel (28) zum Zuführen von festem Abfallmaterial, das getrocknet werden soll, an einem Zuführpunkt (32), der sich am Boden des Aufwärtsabschnitts befindet;
- ein Mittel (70, 80) zum Trennen des finalen Trocknungsgases von dem getrockneten festen Abfallmaterial, **dadurch gekennzeichnet, dass**
- die Einrichtung ferner ein Gebläse (56) zum Zuführen eines Trocknungsgases in den genannten Aufwärtsabschnitt mit einer Geschwindigkeit von mehr als 15 m/s umfasst, wobei das Trocknungsgas Abluft aus einem Klinkerkühler umfasst, um eine Aufwärtsströmung des genannten Abfallmaterials in dem Aufwärtsabschnitt zu erzeugen und um ein finales Trocknungsgas und getrocknetes festes Abfallmaterial bereitzustellen.

14. Anlage zur Herstellung von Klinker, umfassend einen Kalzinator zum Kalzinieren von Rohmehl, einen Brennofen zum Sintern des Rohmehls und eine Einrichtung nach Anspruch 13, wobei die genannte Anlage auch eine Fördereinrichtung (81) zum Fördern des genannten getrockneten festen Abfallmaterials aufweist, wobei die genannte Fördereinrichtung mit einem Brenner des genannten Kalzinierers und/oder einem Brenner des genannten Ofens verbunden ist.

15. Anlage nach dem vorhergehenden Anspruch, ferner umfassend einen Klinkerkühler (110) mit mehreren Abteilen, wobei der Einlass von mindestens einem (114') der genannten Abteile mit einer Vorkammer (150) verbunden ist, die eine Frischluftleitung (152) aufnimmt, die mit einer beweglichen Klappe (154) sowie einer weiteren Leitung (90) zur Zuführung des finalen Trocknungsgases versehen ist.

## Revendications

1. Procédé pour le séchage de matériau de déchet solide comprenant:
- prévoir un tuyau de séchage (40) comprenant une section ascendante (44) ;
- alimenter un matériau de déchet solide à sécher à un point d'alimentation (32), situé au fond de ladite section ascendante ;
- alimenter un gaz de séchage dans ladite section ascendante à une vitesse supérieure à 15 m/s, ledit gaz de séchage comprenant un gaz d'échappement provenant d'un refroidisseur de clinker, afin de créer un débit ascendant dudit matériau de déchet solide dans ladite section ascendante et pour fournir un gaz de séchage final et matériau de déchet solide séché ; et
- séparer le gaz de séchage final du matériau de déchet solide séché, en aval du tuyau de séchage.

2. Procédé selon la revendication 1, dans lequel le temps de séjour du gaz dans le tuyau de séchage (40) est inférieur à 5 secondes.

3. Procédé selon la revendication 1 ou 2, dans lequel la hauteur (H) de la section ascendante est supérieure à 20 mètres.

4. Procédé selon l'une quelconque des revendications précédentes, dans lequel la section transversale du tuyau de séchage est inférieure à 1500 mm.

5. Procédé selon l'une quelconque des revendications précédentes, dans lequel la longueur totale du tuyau de séchage est supérieure à 25 mètres.

6. Procédé selon l'une quelconque des revendications précédentes, dans lequel du matériau de déchet est alimenté au point d'alimentation à une vitesse ascendante supérieure à 20 m/s.

7. Procédé selon l'une quelconque des revendications précédentes, dans lequel le gaz de séchage est alimenté dans le tuyau de séchage à une température de 125 à 300°C.

8. Procédé selon l'une quelconque des revendications précédentes, dans lequel le gaz d'échappement est dilué avec de l'air frais avant le point d'alimentation et !e débit d'air frais est contrôlé en fonction de la température du gaz de séchage en aval du tuyau de séchage.

9. Procédé selon l'une quelconque des revendications précédentes, dans lequel le tuyau de séchage comprend en outre une section descendante (48), séparée de la section ascendante (44) par une section courbe (46).

10. Procédé de production de clinker, comprenant les étapes suivantes:
- sécher le matériau de déchet solide par un procédé de séchage selon l'une quelconque des revendications précédentes,
- alimenter le matériau de déchet solide séché comme combustible dans un brûleur d'un calcinateur et/ou dans un brûleur d'un four; un autre combustible complémentaire étant utilisé si nécessaire,
- calciner la farine brute dans ledit calcinateur, et
- fritter la farine brute dans ledit four pour obtenir ledit clinker,

11. Procédé selon la revendication précédente, dans lequel le gaz de séchage final est acheminé vers un refroidisseur de clinker (110).

12. Procédé selon la revendication précédente, dans lequel le gaz de séchage final est acheminé vers le ventilateur d'entrée (118') d'au moins un compartiment (114') dudit refroidisseur de clinker, ledit ventilateur étant relié à une chambre amont (150) recevant de l'air frais, via une conduite d'air frais (152) équipée d'un volet mobile (154).

13. Equipement pour le séchage de matériau de déchet solide comprenant.
- un tuyau de séchage (40) comprenant au moins une section ascendante (44) ;
- un moyen (28) pour alimenter du matériau de déchet solides à sécher à un point d'alimentation (32), situé au fond de ladite section ascendante,
- un moyen (70, 80) pour séparer le gaz de séchage final du matériau de déchet solide séché, **caractérisé en ce que**
- l'équipement comprend en outre un ventilateur (56) pour alimenter un gaz de séchage dans ladite section ascendante à une vitesse supérieure à 15 m/s, ledit gaz de séchage comprenant un gaz d'échappement provenant d'un refroidisseur de clinker, afin de créer un débit ascendant dudit matériau de déchet dans ladite section ascendante et de fournir un gaz de séchage final et un matériau de déchet solide séché.

14. Installation pour la production de clinker, comprenant un calcinateur pour calciner la farine brute, un four pour fritter la farine brute, et un équipement selon la revendication 13, ladite installation comprenant également des moyens de transport (81) pour transporter ledit matériau de déchet solide séché, lesdits moyens de transport étant reliés à un brûleur dudit calcinateur et/ou un brûleur dudit four.

15. Installation selon la revendication précédente, comprenant en outre un refroidisseur de clinker (110) comprenant plusieurs compartiments, l'entrée d'au moins un (114') desdits compartiments étant reliée à une chambre préliminaire (150) recevant une conduite d'air frais (152) munie d'un volet mobile (154), ainsi qu'une autre conduite (90) pour alimenter le gaz de séchage final.
